# EUROPÄISCHE PATENTSCHRIFT

(11) **EP 0 818 726 B1**
(45) Veröffentlichungstag und Bekanntmachung des Hinweises auf die Patenterteilung: **29.01.2003**
(21) Anmeldenummer: 97110677.8
(22) Anmeldetag: 30.06.1997
(51) Int. Cl.: G06F 3/00, G06F 3/16

(54) **Anordnung und Verfahren zur Aktivierung und Deaktivierung einer rechnergestützten Anwendung**
Apparatus and method to activate and deactivate a computer based application
Dispositif et procédé pour activer et désactiver une application sur un ordinateur

(30) Priorität: 12.07.1996 DE 19628253
(43) Veröffentlichungstag der Anmeldung: 14.01.1998
(73) Patentinhaber: SIEMENS AKTIENGESELLSCHAFT, 80333 München (DE)
(72) Erfinder: Niemöller, Meinrad, 83607 Holzkirchen (DE)

(56) Entgegenhaltungen:
- EP-A- 0 694 833
- US-A- 5 247 433
- "PERSONAL COMPUTER ENVIRONMENTAL CONTROL VIA A PROXIMITY SENSOR" IBM TECHNICAL DISCLOSURE BULLETIN, Bd. 36, Nr. 8, 1.August 1993, Seiten 343-345, XP000390248

## Beschreibung

Verschiedenste computergestützte Anwendungen, beispielsweise Textverarbeitungsprogramme, Bildverarbeitungsprogramme, Zeichenprogramme oder Sprachverarbeitungsprogramme, z. B. Spracherkennungsprogramme, können auf verschiedenste Arten aktiviert bzw. deaktiviert werden.

So ist es beispielsweise üblich, durch kurz aufeinanderfolgende Maus-Klicks ein Programm zu starten oder zu beenden. Auch kann ein Programm üblicherweise nach Ablauf einer vorgebbaren Zeit nach Nichtbenutzung des Programms abgebrochen werden.

Diese Vorgehensweisen weisen jedoch v. a. die Nachteile auf, daß entweder eine explizite Aktion eines Benutzers eines Anwenderprogramms zur Aktivierung bzw. Deaktivierung oder auch Unterbrechung des Anwenderprogramms erforderlich ist bzw. daß eine vorgebbare Zeit von Nichtbenutzung vergehen muß, bis das Anwenderprogramm beendet wird bzw. unterbrochen wird.

Ferner treten in dem speziellen Anwendungsbereich der Spracherkennungssysteme die Probleme auf, daß Äußerungen eines Benutzers von Äußerungen anderer Personen in der Umgebung des Benutzers sowie von störenden Umweltgeräuschen unterschieden werden müssen. In vielen potentiellen Einsatzsituationen von Spracherkennungssystemen wechseln die Benutzer häufig. Ferner kann der Fall auftreten, daß der Benutzer sich schnell zum Spracherkennungssystem hin und wieder weg bewegt, so daß beispielsweise ein Plazieren eines Mikrophons am Kopf eines Benutzers beispielsweise als Head-Set, nicht in Frage kommt.

Ferner ist eine Anforderung zur Aktivierung, Deaktivierung bzw. Unterbrechung, also zur Steuerung von Anwenderprogrammen, die mit Hilfe eines Rechners durchgeführt werden, daß sich ein Benutzer der Anwendung völlig frei bewegen kann. In den Spracherkennungssystemen führt das ferner zu einer Anforderung, daß sich ein Benutzer wie in einer natürlichen Mensch-Maschine-Kommunikation von einem Spracherkennungssystem abwenden kann und seine Äußerungen an einen anderen Adressaten richten kann, ohne daß das Spracherkennungssystem weiterhin versucht, die gesprochene Sprache des Benutzers zu erkennen.

Eine Anordnung sowie ein Verfahren zur Kopfverfolgung ist beispielsweise aus den Dokumenten [1], [2], [3] bekannt.

Ferner ist aus dem Dokument [4] bekannt, im Zusammenhang mit Spracherkennungssystemen eine Vielzahl von Mikrophonen als ein sog. Mikrophon-Array auszugestalten und über Phasenverschiebungen der Schallwellen, der gesprochenen Sprache des Benutzers, die Quelle des Schalls, also des Benutzers, zu orten. Wird ein Computer jedoch mit solchen Mikrophon-Arrays zur Ortung des Benutzers eines Spracherkennungssystems eingesetzt, ergibt sich das Problem, daß dem Computer die Information fehlt, wann die Ortung des Benutzers gestartet werden soll und wo mit der Suche des Benutzers begonnen werden soll. Ferner ist es bei solchen Systemen nicht möglich, zu erkennen, ob sich ein Benutzer vom Spracherkennungssystem abwendet und zu einer anderen Person spricht oder sich ganz von dem Computersystem entfernt. Damit ist das in dem Dokument [4] beschriebene Verfahren und die Anordnung zur Durchführung des Verfahrens im Rahmen der Aktivierung bzw. Deaktivierung, also Steuerung von einer computergestützten Anwendung (Anwenderprogramm) nicht ausreichend robust und zudem wird ein erhöhter Rechenbedarf des Computers auch dann benötigt, wenn gar kein Benutzer vorhanden ist und somit der Computer gar nicht benötigt wird.

In [5] ist ein Telekonferenzterminal beschrieben, mit dem eine multimediale Telekonferenz ermöglicht wird.

Aus US 5,247,433 ist eine Anordnung nach dem Oberbegriff des Anspruchs 1 und ein Verfahren nach dem Oberbegriff des Anspruchs 7 bekannt.

Der Erfindung liegt das Problem zugrunde, eine computergestützte Anwendung zu aktivieren bzw. zu deaktivieren.

Das Problem wird durch die Anordnung gemäß Patentanspruch 1 sowie durch das Verfahren gemäß Patentanspruch 7 gelöst.

Bei der Anordnung ist eine Kopfverfolgungseinheit mit mindestens einem Mikrophon gekoppelt, die beide mit einem Computer, mit dem die jeweilige Anwendung durchgeführt wird, gekoppelt sind. Mit der Kopfverfolgungseinheit wird die Kopfposition und/oder die Position eines charakteristischen Merkmals des Kopfes eines Benutzers der Anwendung bestimmt. Liegt die Kopfposition und/oder die Position des charakteristischen Merkmals in einem vorgebbaren Bereich, so wird die Anwendung und/oder das Mikrophon aktiviert. Liegt die Kopfposition und/oder die Position des charakteristischen Merkmals jedoch außerhalb des vorgebbaren Bereichs, so wird die Anwendung und/oder das Mikrophon deaktiviert.

Bei dem Verfahren gemäß Patentanspruch 6 wird die Kopfposition und/oder die Position eines charakteristischen Merkmals des Kopfes eines Benutzers ermittelt und abhängig von der Kopfposition und/oder abhängig von der Position des charakteristischen Merkmals wird die Anwendung und/oder das Mikrophon dann aktiviert, wenn die Kopfposition und/oder die Position des charakteristischen Merkmals innerhalb eines vorgebbaren Bereichs liegt, und dann deaktiviert, wenn sich die Kopfposition und/oder die Position des charakteristischen Merkmals außerhalb des Bereichs befindet.

Die Anordnung bzw. das Verfahren weisen einige erhebliche Vorteile auf.

Es wird eine automatische Aktivierung bzw. Deaktivierung einer computergestützten Anwendung möglich, ohne daß den Benutzern der Anwendung zusätzliche Aktionen zugemutet werden, beispielsweise ein Maus-Klick.

Ferner ist die Reaktionszeit der Anwendung auf eine von dem Benutzer durch die Kopfposition des Benutzers implizit "gewünschte" Aktivierung bzw. Deaktivierung der Anwendung durch den Benutzer im Vergleich zu einer benötigten Zusatzaktion des Benutzers zur Aktivierung bzw. Deaktivierung geringer.

Vorteilhafte Weiterbildungen der Erfindung ergeben sich aus den abhängigen Ansprüchen.

Es ist sowohl bei der Anordnung als auch bei dem Verfahren vorteilhaft, daß bei der Kopfverfolgungseinheit zusätzlich die Position eines charakteristischen Merkmals des Kopfes eines Benutzers, mit dem es möglich ist, die Position des Gesichts des Benutzers relativ zu einem Bildschirm ermittelt wird, z. B. die Mundposition des Benutzers, wodurch die Genauigkeit der Entscheidung, ob eine Aktivierung bzw. Deaktivierung ausgeführt werden soll, deutlich erhöht wird.

Ferner ist es sowohl bei der Anordnung als auch bei dem Verfahren vorteilhaft, daß mindestens ein Mikrophon als Richtmikrophon ausgestaltet wird, wodurch die Qualität der Weiterverarbeitung von Sprache, die von dem Benutzer eingesprochen wird, in dem Rechner erheblich erhöht wird.

Ferner ist es vorteilhaft, mindestens ein Mikrophon schwenkbar auszugestalten, so daß der Richtkegel des jeweiligen Mikrophons dem Benutzer nachgeführt werden kann. Auch mit dieser Weiterbildung wird die Qualität des aufgenommenen Sprachsignals weiter erhöht und damit auch die Qualität der Weiterverarbeitung.

In den Figuren ist ein Ausführungsbeispiel der Erfindung dargestellt, welches im weiteren näher erläutert wird.

Es zeigen
- Fig. 1: eine prinzipielle Anordnung mit einer Kamera, einem Mikrophon, einem Bildschirm sowie dem Rechner, mit dem die Anwendung durchgeführt wird;
- Fig. 2: eine Skizze der Anordnung in einer Seitenansicht;
- Fig. 3a und 3b: eine Skizze einer beispielhaft dargestellten Anwendungssituation mit dem Benutzer des Systems, wenn die Anwendung aktiviert wird;
- Fig. 4a und 4b: eine Skizze einer beispielhaft dargestellten Anwendungssituation mit dem Benutzer und einer weiteren Person, wenn ein Gespräch zwischen dem Benutzer und der weiteren Person stattfindet, der Benutzer aus diesem Grunde den Kopf zur weiteren Person neigt und somit die Anwendung deaktiviert wird.

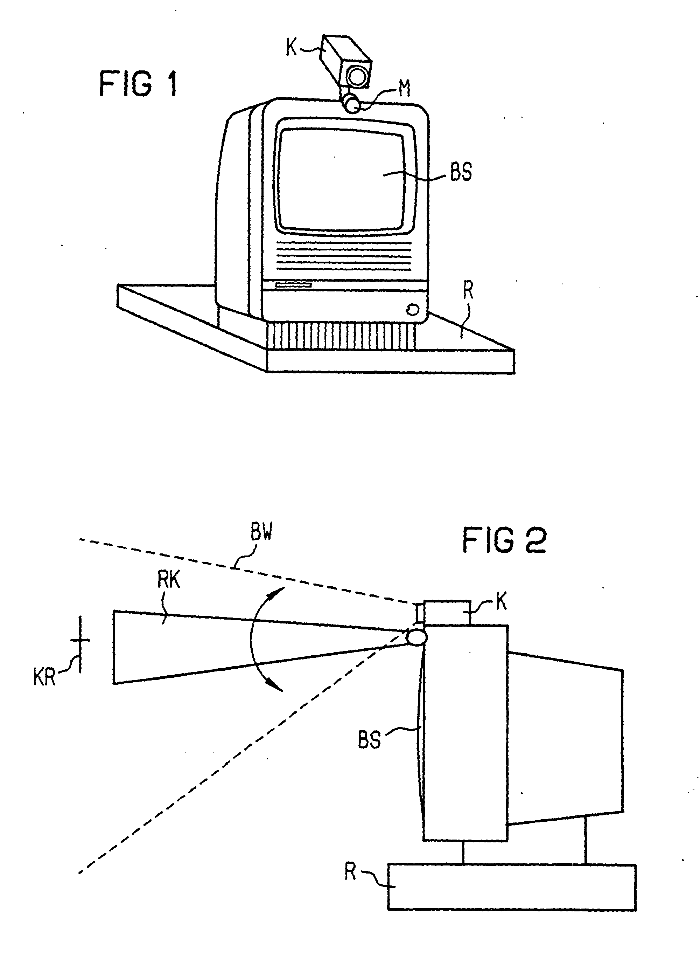

In Fig. 1 ist die Anordnung dargestellt. Die Anordnung weist mindestens folgende Komponenten auf:
- eine Kamera K, mit der ein örtlicher Bereich vor einem Bildschirm BS aufgenommen wird,
- mindestens ein Mikrophon M,
- einen Rechner R, mit dem eine beliebige Anwendung durchgeführt wird,
- eine Kopfverfolgungseinheit HT, die beispielsweise in den Rechner R integriert ist,
- eine Steuereinheit ST.

Unter der Anwendung ist im weiteren eine beliebige computergestützte Anwendung, die mit dem Rechner R durchgeführt wird, zu verstehen.

Beispiele für die Anwendung sind beliebige Betriebssystemprogramme, Textverarbeitungsprogramme, Bildverarbeitungsprogramme, Sprachverarbeitungsprogramme oder auch Spracherkennungsprogramme. Die Art der Anwendung ist jedoch völlig beliebig.

Mit der Kopfverfolgungseinheit HT wird eine Kopfposition eines Benutzers B der Anwendung ermittelt. Die Funktionsweise der Kopfverfolgungseinheit HT ist beispielsweise. in den Dokumenten [1], [2], [3] beschrieben.

Das Mikrophon M ist, beispielsweise über eine Kopplung mit dem Rechner R, sowohl mit der Anwendung als auch mit der Kopfverfolgungseinheit HT gekoppelt. Von dem Mikrophon M wird von dem Benutzer B gesprochene Sprache aufgenommen und dem Rechner R zugeführt und somit auch der jeweiligen Anwendung.

Zusätzlich oder ersatzweise zu der Kopfposition des Benutzers B können beliebige charakteristische Merkmale eines Kopfes, beispielsweise die Augenposition des Benutzers B, die Mundposition des Benutzers B, die Position der Nase des Benutzers B, oder auch andere charakteristische Merkmale des Kopfes des Benutzers B bestimmt werden, die dazu dienen können, zu ermitteln, ob der Kopf des Benutzers B dem Bildschirm BS zugewendet ist oder nicht.

Die Position der Kamera K ist nicht notwendigerweise direkt über dem Bildschirm BS. Eine andere Position der Kamera K führt lediglich zu geometrischen Korrekturberechnungen, um die Position des Kopfes bzw. vorgebbarer Merkmale des Kopfes des Benutzers B bezüglich des Bildschirms BS zu bestimmen.

Die Steuereinheit ST ist derart ausgestaltet, daß abhängig von der Kopfposition des Benutzers B die Anwendung und/oder das Mikrophon M aktiviert bzw. deaktiviert wird. Die Anwendung bzw. das Mikrophon M wird aktiviert, wenn die Kopfposition sich innerhalb eines vorgebbaren Bereichs, der im weiteren als Toleranzbereich bezeichnet wird, befindet. Befindet sich die Kopfposition jedoch außerhalb des Toleranzbereichs, so wird die Anordnung bzw. das Mikrophon M deaktiviert. Als Toleranzbereich kann beispielsweise ein im weiteren beschriebener Richtkegel RK des Mikrophons M verwendet werden.

Der Toleranzbereich, in dem sich der Kopf bzw. ein beliebiges charakteristisches Merkmal des Kopfes des Benutzers B befinden darf, ist jedoch frei vorgebbar und lediglich abhängig von der speziellen Applikation.

Eine beispielhafte Darstellung der Situation ist in Fig. 2 dargestellt, bei dem in einer Seitenansicht der Anordnung mit einem Kreuz KR die ermittelte Position der Schallquelle, beispielsweise dem Mund des Benutzers B dargestellt ist. Ferner ist ein Richtkegel RK des Mikrophons M dargestellt, der bei Aktivierung der Anwendung z. B. auf den Benutzer B gerichtet ist, beispielsweise direkt auf die Schallquelle.

Ferner ist ein Blickwinkel BW der Kamera K in Fig. 2 mit einer gepunkteten Linie symbolisch dargestellt.

Mit dem Mikrophon M wird die Sprache des Benutzers B aufgenommen und dem Rechner R und somit auch der Anwendung zugeführt. In einer Weiterbildung der Anordnung ist es vorgesehen, daß mindestens ein Mikrophon M als Richtmikrophon ausgestaltet ist, wodurch die Qualität der aufgenommenen Sprache erheblich verbessert wird.

Ferner ist in einer Weiterbildung der Anordnung vorgesehen, daß das mindestens eine Mikrophon M schwenkbar ausgestaltet ist, so daß in einer weiteren Weiterbildung der Anordnung das Mikrophon M durch eine Mikrophonsteuereinheit MST der durch die Kopfverfolgungseinheit HT ermittelten Kopfposition des Benutzers B nachgeführt werden kann. Auf diese Weise ist eine Ausrichtung des Mikrophons M bezüglich der Kopfposition des Benutzers B möglich, wodurch die Qualität der aufgenommenen und weiterverarbeiteten Sprache weiter verbessert wird.

Bei dem Verfahren wird die Kopfposition des Benutzers B ermittelt, beispielsweise mit der Kopfverfolgungseinheit HT. Zusätzlich oder ersatzweise zur Kopfposition des Benutzers B kann, wie im vorigen beschrieben wurde, auch ein beliebiges anderes charakteristisches Merkmal des Kopfes des Benutzers B verwendet werden, welches zur relativen Positionsbestimmung des Kopfes des Benutzers B bezüglich des Bildschirms BS geeignet ist.

Es wird für die ermittelte Kopfposition in einem weiteren Schritt überprüft, ob sich die Kopfposition und/oder das charakteristische Merkmal des Kopfes des Benutzers B innerhalb des Toleranzbereiches befindet. Ist dieses der Fall, befindet sich also die Kopfposition und/oder das charakteristische Merkmal des Kopfes des Benutzers B innerhalb des Toleranzbereichs, so wird die Anwendung aktiviert. Ist dies jedoch nicht der Fall, befindet sich also die Kopfposition und/oder ein charakteristisches Merkmal des Kopfes außerhalb des Toleranzbereichs, so wird die Anwendung deaktiviert.

In einer Variante des Verfahrens ist es vorgesehen, daß nicht direkt die Anwendung aktiviert bzw. deaktiviert wird, sondern daß das mindestens eine Mikrophon M der Anordnung nach denselben, oben beschriebenen Kriterien ersatzweise oder zusätzlich aktiviert bzw. deaktiviert wird.

Die oben beschriebenen Weiterbildungen, daß sowohl das mindestens eine Mikrophon M als Richtmikrophon ausgestaltet sein kann, als auch, daß das Mikrophon M schwenkbar angeordnet sein kann und gesteuert von einer Mikrophonsteuereinheit MST der Kopfposition des Benutzers B nachgeführt werden kann, sind auch in dem Verfahren als Weiterbildungen vorgesehen.

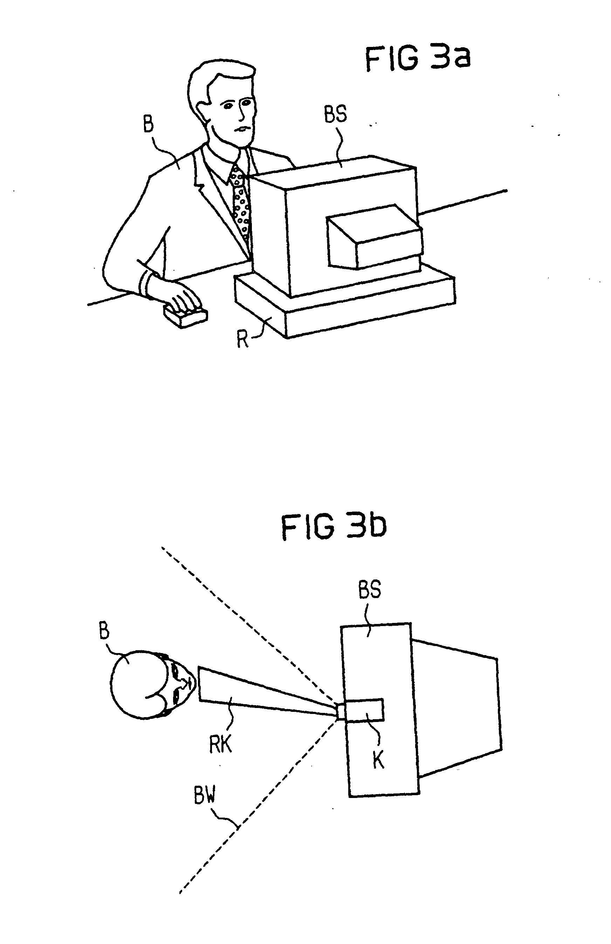

In den Fig. 3a und 3b ist eine beispielhaft dargestellte Anwendungssituation skizziert, die zur Aktivierung der Anwendung bzw. des Mikrophons M führt.

In Fig. 3a ist der Benutzer B mit seinem Gesicht direkt dem Bildschirm BS des Rechners R zugewendet. Dies wird von der z. B. von der Kopfverfolgungseinheit HT ermittelt und die Anwendung bzw. das Mikrophon M wird aktiviert und somit kann der Benutzer B mit der von ihm ausgewählten Anwendung beliebig arbeiten.

In Fig. 3b ist in der Draufsicht derselben Situation das Prinzip dargestellt, daß der Richtkegel RK des Mikrophons M und der Blickwinkel der Kamera K auf den Kopf des Benutzers gerichtet sind.

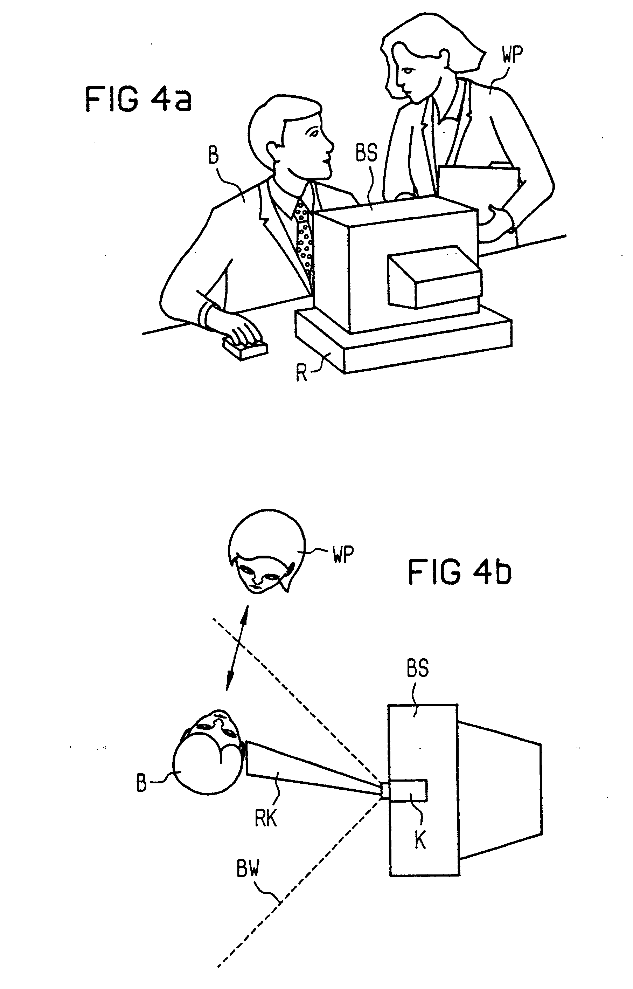

In den Fig. 4a und 4b ist eine beispielhaft dargestellte Anwendungssituation skizziert, die zur Deaktivierung der Anwendung führt.

Es ist zusätzlich eine weitere Person WP dargestellt, mit der der Benutzer B in einen Dialog tritt. Um diesen Dialog zu führen, wendet sich der Benutzer B mit seinem Gesicht von dem Bildschirm BS ab und unterhält sich mit der weiteren Person WP.

Dies führt zu einer unterschiedlichen Kopfposition des Benutzers B verglichen mit der in Fig. 3b dargestellten Kopfposition des Benutzers B.

Es wird durch die Kopfverfolgungseinheit HT erkannt, daß sich der Benutzer B von dem Bildschirm BS abwendet, d. h., daß sich der Kopf und/oder das charakteristische Merkmal nicht in dem Toleranzbereich befindet, und somit in dem Moment nicht mehr mit der Anwendung arbeiten möchte. Somit wird die Anwendung bzw. das Mikrophon M deaktiviert.

Sowohl die Anordnung als auch das Verfahren können sehr vorteilhaft zur Aktivierung bzw. Deaktivierung eines Sprachverarbeitungssystems, beispielsweise einer Spracherkennungseinrichtung oder einem Textverarbeitungsprogramm mit integrierter Spracherkennung verwendet werden, wodurch v. a. erreicht wird, daß die Sprachsignale des Benutzers B von Sprachsignalen, die von weiteren Personen WP oder von Umweltgeräuschen verursacht werden, unterschieden werden können. Dies führt zu einer erheblichen Verbesserung der Ergebnisse, die durch die Sprachverarbeitungssysteme erreicht werden können.

Ferner ist es in einer Weiterbildung sowohl der Anordnung als auch des Verfahrens vorgesehen, daß eine Vielzahl von Mikrophonen M eingesetzt werden, die als sog. Mikrophon-Arrays ausgestaltet sind, deren Funktionsweise beispielsweise aus dem Dokument [4] bekannt ist. Auch der Richtkegel RK, der durch das Mikrophon-Array gebildet wird, kann selbstverständlich in einer Weiterbildung der Anordnung bzw. des Verfahrens schwenkbar und durch die Mikrophonsteuereinheit MST der Kopfposition des Benutzers B nachführbar ausgestaltet sein.

In diesem Dokument wurden folgende Veröffentlichungen zitiert:
[1] C. Maggioni und B. Kämmerer, Gesture Computer - History, Design, and Applications, Workshop on Computer Vision in Man-Machine Interfaces, S. 1 - 15, 1996
[2] W. Bradford Paley, Head-Tracking Stereo Display: Experiments and Applications, SPIE, Vol. 1669, Stereoscopic Displays and Applications III, New York, NY, S. 84 - 89, 1992
[3] R. Akka, Utilizing 6D head-tracking data for stereoscopic computer graphics perspective tranformations, SPIE, Vol. 1915, Stereoscopic Displays and Applications IV, San Rafael, CA, S. 147 - 154, 1993
[4] J. Flanagan et al, Computer Steered Microphone Arrays for Sound Transduction in Large Rooms, Journal of the Acoustical Society of America, Vol. 78, Nr. 5, 1985
[5] US 5 477 546

## Patentansprüche

1. Anordnung zur Aktivierung und Deaktivierung einer rechnergestützten Anwendung (A),
- mit einer Kopfverfolgungseinheit (HT), mit der eine Kopfposition und/oder die Position eines charakteristischen Merkmals des Kopfes eines Benutzers (B) ermittelt wird,
- mit mindestens einem Mikrophon (M), das mit der Kopfverfolgungseinheit (HT) und mit der Anwendung (A) gekoppelt ist, und mit dem Sprache des Benutzers (B) aufgenommen wird und der Anwendung (A) zugeführt wird,
**gekennzeichnet durch**
- eine Steuereinheit (ST), mit der die Anwendung (A) und/oder das Mikrophon (M) aktiviert wird, wenn sich mindestens die ermittelte Position in einem vorgebbaren Bereich befindet und mit der die Anwendung (A) und/oder das Mikrophon (M) deaktiviert wird, wenn sich mindestens die ermittelte Position nicht in dem Bereich befindet.

2. Anordnung nach Anspruch 1,
bei der die Kopfverfolgungseinheit (HT) derart ausgestaltet ist, daß zusätzlich die Mundposition des Benutzers (B) ermittelt wird.

3. Anordnung nach Anspruch 1 oder 2,
bei der mindestens ein Mikrophon (M) als Richtmikrophon ausgestaltet ist.

4. Anordnung nach einem der Ansprüche 1 bis 3,
bei der mindestens ein Mikrophon (M) schwenkbar ausgestaltet ist.

5. Anordnung nach Anspruch 4,
bei der eine Mikrophonsteuereinheit (MST) zur Nachführung des schwenkbar ausgestalteten Mikrophons (M) zur Kopfposition des Benutzers (B) vorgesehen ist.

6. Anordnung nach einem der Ansprüche 1 bis 5 eingesetzt zur Aktivierung bzw. Deaktivierung eines Sprachverarbeitungsystems.

7. Verfahren zur Aktivierung und Deaktivierung einer rechnergestützten Anwendung (A), der über mindestens ein Mikrophon (M) Sprache eines Benutzers (B) zugeführt wird,
- bei dem eine Kopfposition eines Benutzers (B) und/oder die Position eines charakteristischen Merkmals des Kopfes des Benutzers (B) ermittelt wird,
**dadurch gekennzeichnet,**
**dass**
- die Anwendung (A) und/oder das Mikrophon (M) aktiviert wird, wenn sich mindestens die ermittelte Position in einem vorgebbaren Bereich befindet, und
- die Anwendung (A) und/oder das Mikrophon (M) deaktiviert wird, wenn sich mindestens die ermittelte Position nicht in dem Bereich befindet.

8. Verfahren nach Anspruch 7,
bei der mindestens ein Mikrophon (M) als Richtmikrophon ausgestaltet ist.

9. Verfahren nach einem der Anspruch 7 oder 8,
bei der mindestens ein Mikrophon (M) schwenkbar ausgestaltet ist.

10. Verfahren nach Anspruch 9,
bei der eine Mikrophonsteuereinheit (MST) zur Nachführung des schwenkbar ausgestalteten Mikrophons (M) zur Kopfposition des Benutzers (B) vorgesehen ist.

11. Verfahren nach einem der Ansprüche 7 bis 10 eingesetzt zur Aktivierung bzw. Deaktivierung eines Sprechverarbeitungsystems.

## Claims

1. Arrangement for activating and deactivating a computer-aided application (A),
- having a head tracking unit (HT) which is used to ascertain a head position and/or the position of a characteristic feature of the head of a user (B),
- having at least one microphone (M) which is coupled to the head tracking unit (HT) and to the application (A) and is used to record speech from the user (B) and to supply it to the application (A),
**characterized by**
- a control unit (ST) which is used to activate the application (A) and/or the microphone (M) when at least the ascertained position is in a prescribable range and which is used to deactivate the application (A) and/or the microphone (M) when at least the ascertained position is not in the range.

2. Arrangement according to Claim 1,
in which the head tracking unit (HT) is designed such that the mouth position of the user (B) is additionally ascertained.

3. Arrangement according to Claim 1 or 2,
in which at least one microphone (M) is in the form of a directional microphone.

4. Arrangement according to one of Claims 1 to 3,
in which at least one microphone (M) is designed so that it can be pivoted.

5. Arrangement according to Claim 4,
in which a microphone control unit (MST) is provided for the purpose of readjusting the pivotably designed microphone (M) to the head position of the user (B).

6. Arrangement according to one of Claims 1 to 5, used for activating and deactivating a voice processing system.

7. Method for activating and deactivating a computer-aided application (A) to which speech from a user (B) is supplied via at least one microphone (M),
- in which a head position for a user (B) and/or the position of a characteristic feature of the head of the user (B) is/are ascertained,
**characterized**
**in that**
- the application (A) and/or the microphone (M) is/are activated when at least the ascertained position is in a prescribable range, and
- the application (A) and/or the microphone (M) is/are deactivated when at least the ascertained position is not in the range.

8. Method according to Claim 7, in which at least one microphone (M) is in the form of a directional microphone.

9. Method according to either Claim 7 or 8,
in which at least one microphone (M) is designed so that it can be pivoted.

10. Method according to Claim 9,
in which a microphone control unit (MST) is provided for the purpose of readjusting the pivotably designed microphone (M) to the head position of the user (B).

11. Method according to one of Claims 7 to 10, used for activating and deactivating a voice processing system.

## Revendications

1. Dispositif pour activer et désactiver une application assistée par ordinateur (A),
- avec une unité de poursuite de tête (HT), avec laquelle une position de la tête et/ou la position d'une caractéristique de la tête d'un utilisateur (B) est déterminée,
- avec au moins un microphone (M) raccordé à l'unité de poursuite de tête (HT) et à l'application (A), et avec lequel la parole de l'utilisateur (B) est enregistrée et amenée à l'application (A),
**caractérisé en ce que**
- une unité de commande (ST) avec laquelle l'application (A) et/ou le microphone (M) est activé, lorsqu'au moins la position détectée se trouve dans une zone prédéfinissable, et avec laquelle l'application (A) et/ou le microphone (M) est désactivé lorsqu'au moins la position détectée ne se trouve pas dans la zone.

2. Dispositif selon la revendication 1
dans lequel l'unité de poursuite de tête (HT) est conçue de telle manière que la position de la bouche de l'utilisateur (B) est détectée en plus.

3. Dispositif selon la revendication 1 ou 2,
dans lequel au moins un microphone (M) est conçu comme microphone directionnel.

4. Dispositif selon l'une des revendications 1 à 3,
dans lequel au moins un microphone (M) est conçu de manière pivotante.

5. Dispositif selon la revendication 4,
dans lequel une unité de commande de microphones (MST) est prévue pour la poursuite du microphone (M) conçu de manière pivotante pour la position de la tête de l'utilisateur (B).

6. Dispositif selon l'une des revendications 1 à 5, utilisé pour activer resp. désactiver un système de traitement vocal.

7. Procédé pour activer et désactiver une application (A) assistée par ordinateur, à laquelle est amenée la parole d'un utilisateur (B) par l'intermédiaire d'au moins un microphone (M),
- dans lequel une position de la tête d'un utilisateur (B) et/ou la position d'une caractéristique de la tête de l'utilisateur (B) est déterminée,
**caractérisé en ce**
**que**
- l'application (A) et/ou le microphone (M) est activé lorsqu'au moins la position détectée se trouve dans une zone prédéfinissable, et
- l'application (A) et/ou le microphone (M) est désactivé lorsqu'au moins la position détectée ne se trouve pas dans la zone.

8. Procédé selon la revendication 7,
dans lequel au moins un microphone (M) est conçu comme microphone directionnel.

9. Procédé selon l'une des revendications 7 ou 8,
dans lequel au moins un microphone (M) est conçu de manière pivotante.

10. Procédé selon la revendication 9,
dans lequel une unité de commande de microphone (MST) est prévue pour la poursuite du microphone (M) conçu de manière pivotante pour la position de la tête de l'utilisateur (B).

11. Procédé selon l'une des revendications 7 à 10, utilisé pour activer resp. désactiver un système de traitement vocal.
